# FASCICULE DE BREVET EUROPEEN

(11) **EP 2 309 615 B1**
(45) Date de publication et mention de la délivrance du brevet: **08.12.2021**
(21) Numéro de dépôt: 10186974.1
(22) Date de dépôt: 08.10.2010
(51) Int. Cl.: H02J 7/00, H01M 10/46, H01M 10/44

(54) **Système et procédé de gestion de charge d'une batterie**
System und Verfahren zur Steuerung des Aufladevorgangs einer Batterie
System and method for managing the charge of a battery

(30) Priorité: 09.10.2009 FR 0904839
(43) Date de publication de la demande: 13.04.2011
(73) Titulaire: Saft Groupe S.A., 93170 Bagnolet (FR)
(72) Inventeur: Maloizel, Serge, 16730 Trois Palis (FR); Fleureau. Patrice, 33320 Le Taillan Médoc (FR)
(74) Mandataire: Hirsch & Associés

(56) Documents cités:
- WO-A2-2009/066782
- GB-A- 1 480 330
- GB-A- 2 312 571
- US-A1- 2005 127 873
- US-A1- 2006 208 701
- None

## Description

La présente invention concerne un système de gestion de charge d'une batterie comprenant au moins un accumulateur électrochimique appelé aussi générateur électrochimique, cellule ou élément et un procédé de gestion de charge. Particulièrement, la présente invention permet une gestion de la charge de batteries, dont le profil de charge, c'est-à-dire la variation de la tension en fonction du temps présente une partie appelée « partie intermédiaire » correspondant à un état de charge (SOC, pour State Of Charge en anglais) compris entre 30% et 80% dans laquelle la tension augmente au moins 10 fois moins rapidement en fonction du temps en moyenne que pour une partie appelée «partie fin de charge» correspondant à un SOC compris entre 95% et 100%. L'état de charge SOC est le ratio de la capacité chargée par rapport à la capacité (nominale ou réelle) qui peut être fournie par la batterie, il s'exprime en pourcentage. Les accumulateurs de type Li Ion comprenant dans l'électrode positive une matière active qui est un phosphate de métal lithié LiₓM_{y}P_{z}O₄₋ₜ dans lequel M est au moins un élément du groupe comprenant Fe, Co, Ni, Mn, x allant de 0.9 à 1.1 et y de 0.9 à 1.1, z allant de 0.9 à 1.1 et t allant de 0 à 0.4 présentent un tel profil de charge. Dans la suite de la demande, les accumulateurs comprenant une électrode positive telle que décrite précédemment seront appelés accumulateurs de type LiFePO₄. Par exemple une batterie comprenant au moins un accumulateur Li-ion comprenant du Lithium Fer Phosphate LiFePO₄ chargée à un régime (courant) de charge de C/5 Ampère a une tension qui augmente d'environ 0.5 millivolt par minute dans la partie intermédiaire et augmente d'environ de 20 millivolts par minute dans la partie fin de charge. Le régime de charge est le courant auquel on charge un accumulateur ou une batterie. Il est le courant de référence C/n. C est la capacité de la batterie déterminée dans des conditions spécifiées et n le temps de base en heures pour lequel la capacité est déclarée. Or, dans le cas d'accumulateur de type Li Ion, il est nécessaire de ne pas dépasser une tension de seuil maximum au-delà de laquelle il existe un risque d'emballement thermique et de détérioration de la batterie.

De manière connue en soi, des accumulateurs d'une même batterie, bien que fabriqués pour offrir des performances électriques identiques, peuvent présenter des écarts en terme de valeur d'auto-décharge, de capacité absolue et/ou posséder des rendements faradiques différents. On appelle quantité d'auto-décharge, la perte moyenne relative de capacité sur une durée et pour une température données lorsque la batterie est en stockage. On appelle capacité, la quantité d'électricité, en ampères-heures (Ah), qu'un accumulateur chargé à 100% peut faire circuler pendant la période de décharge. Enfin, on appelle rendement faradique, le rapport entre la quantité d'électricité débitée à la décharge et la quantité d'électricité accumulée lors de la procédure de la charge. En raison de la dispersion existant entre plusieurs accumulateurs, les accumulateurs ne se retrouvent pas au même état de charge. Dans notre invention, on entend par module d'accumulateurs un ensemble d'accumulateurs montés en parallèle les uns avec les autres, le module d'accumulateurs pouvant être un seul accumulateur si aucun autre accumulateur n'est monté en parallèle à celui-ci. Dans une batterie, la tension aux bornes de chaque module d'accumulateurs n'est donc pas identique. Ainsi, lorsque un ou plusieurs des modules d'accumulateurs a atteint un SOC de 100% d'autres modules d'accumulateurs peuvent ne pas être complètement chargés. La batterie n'utilise donc pas toute sa capacité de stockage lorsqu'elle est dans la partie de fin de charge car certains des accumulateurs ne sont pas complètement chargés.

Afin d'optimiser la charge d'une batterie, il est possible de réaliser un équilibrage de charge entre les modules d'accumulateurs de la batterie. L'équilibrage de charge consiste à ajuster la tension aux bornes de chaque module d'accumulateurs à une même tension ou dans une même plage de tension. A la fin de cette étape, les éléments sont chargés totalement et équilibrés entre eux.

Le document FR-A-2 825 842 décrit un procédé et système de gestion de charge à seuils fixes d'accumulateur de type Lithium-Ion permettant d'équilibrer les accumulateurs. Le système de gestion comporte un dispositif de dérivation par accumulateur. Chaque dispositif de dérivation est relié à un dispositif d'arrêt commun commandant l'interruption de la charge. Le procédé consiste à dériver une partie du courant de charge aux bornes d'un accumulateur pour lequel la tension dépasse une première tension prédéterminée. L'accumulateur passe alors d'une phase de charge à une phase d'équilibrage. Lorsque la tension aux bornes d'un accumulateur en phase équilibrage atteint une deuxième valeur prédéterminée équivalent à une tension de seuil maximum, le dispositif de dérivation correspondant informe le dispositif d'arrêt pour qu'il interrompe la charge de la batterie. Durant l'interruption de la charge, les accumulateurs en phase d'équilibrage se déchargent par leur dispositif de dérivation ; la charge est reprise lorsque la tension aux bornes de tous les accumulateurs devient inférieure à une troisième tension prédéterminée.

Les systèmes et procédés d'équilibrage connus pour les batteries Li-Ion dans lesquelles la matière électrochimiquement active de l'électrode positive est LiMO₂ (où M représente au moins un métal de transition de type Ni, Co, Fe ou Al..) ne conviennent pas aux batteries Li-Ion de type LiFePO₄. Le terme LiMO₂ désigne dans ce qui suit un oxyde lithié d'au moins un métal de transition de type Ni, Fe, Co, Al ou un mélange de ceux-ci. En effet, les accumulateurs comprenant une matière active positive LiMO₂ présentent une variation en fonction du temps sensiblement constante de la tension à leurs bornes durant la partie intermédiaire et fin de charge. Il est possible pour ce type d'accumulateur d'établir une relation entre pourcentage d'état de charge et tension (SOC=f (V)). La relation SOC=f (V) établie pour les accumulateurs de type LiMO₂ n'est pas applicable aux accumulateurs de type LiFePO₄ en raison de la brusque augmentation de tension qui survient dans la partie fin de charge. Il y a donc un risque que la tension d'un module dépasse la tension de seuil maximum et donc un risque d'un emballement thermique si l'on utilise avec une batterie de type LiFePO₄ l'un des procédés de gestion de charge connus.

Il existe donc un besoin pour un système et un procédé de gestion de charge pour des batteries de type Lithium Fer Phosphate LiFePO₄ qui permette une charge optimale de l'ensemble des modules d'accumulateurs sans risque d'emballement thermique.

A cette fin, la présente invention propose une batterie rechargeable comme définie dans la revendication indépendante 1 et un procédé de gestion de la batterie rechargeable comme défini dans la revendication indépendante 10. Des modes de réalisation préférés de l'invention sont définis par les revendications dépendantes.

D'autres caractéristiques et avantages de l'invention apparaîtront à la lecture de la description qui suit de modes de réalisation de l'invention, donnée à titre d'exemple et en référence aux figures annexées dans lesquelles:
- la figure 1 représente un schéma électrique d'un système de gestion de la charge selon un premier mode de réalisation de l'invention ;
- la figure 2 est un graphique représentant une courbe de la tension aux bornes d'un module d'accumulateurs de type LiFePO₄ en fonction du temps ainsi qu'une courbe montrant sa dérivée ;
- la figure 3 est un graphique représentant la tension simulée aux bornes d'une batterie comportant huit modules d'accumulateurs de type LiFePO₄ dont un module d'un accumulateurs présente un état de charge supérieur de 10% aux sept autres modules d'accumulateurs ;
- la figure 4 représente un chronogramme de charge d'une batterie composée de deux modules d'accumulateurs en série associée à un système de gestion de charge selon l'invention ;
- la figure 5 représente un schéma électrique d'un système de gestion de la charge selon un deuxième mode de réalisation;
- la figure 6 représente un schéma électrique d'un système de gestion de la charge selon un troisième mode de réalisation.

Le système de gestion de charge selon l'invention comprend des moyens de mesure de la tension de la batterie et une unité électronique calculant la variation en fonction du temps de la tension à partir des tensions mesurées. L'unité électronique calcule la variation en fonction du temps de la tension (Vbat) en calculant la différence entre une première tension (Vbat) mesurée et une seconde tension (Vbat) mesurée. Par moyens de mesure de la tension de la batterie, on entend des moyens de mesure de la tension aux bornes de l'ensemble des modules d'accumulateurs de la batterie. Par module d'accumulateurs on entend un ensemble d'accumulateurs montés en parallèle les uns avec les autres, le module d'accumulateurs pouvant être un seul accumulateur si aucun autre accumulateur n'est monté en parallèle à celui-ci. La tension aux bornes d'un module d'accumulateurs est identique à la tension de chaque accumulateur présent dans le module.

L'unité électronique commande l'interruption de la charge de la batterie lorsque la variation en fonction du temps de la tension est supérieure à un premier seuil ; ce premier seuil est représentatif de la variation positive en fonction du temps de la tension de la batterie ou d'un accumulateur lorsqu'elle est dans la partie en fin de charge d'un module d'accumulateurs.

La batterie comporte un dispositif de dérivation par module d'accumulateurs de la batterie. Le dispositif de dérivation ferme un circuit de dérivation aux bornes du module d'accumulateurs correspondant lorsque sa tension atteint un seuil de dérivation prédéterminé et ouvre le circuit lorsque la tension aux bornes du module d'accumulateurs atteint un seuil d'arrêt. Le seuil de dérivation prédéterminé est choisi de manière à ce que la tension d'un module d'accumulateurs atteigne ce seuil de dérivation avant que la variation en fonction du temps de la tension de la batterie atteigne le premier seuil. Ainsi, lorsque la charge est interrompue par l'unité électronique, le dispositif de dérivation décharge le module d'accumulateurs correspondant.

Une commande dépendant de la variation en fonction du temps de la tension plutôt que d'une valeur de tension permet de commander l'arrêt de la charge dès que la variation en fonction du temps de la tension de la batterie dépasse une valeur seuil. Le système de gestion de charge selon l'invention peut ainsi déterminer de manière fiable et rapide si un module d'accumulateurs est dans la partie fin de charge et donc interrompre la charge de la batterie avant tout risque de détérioration du module d'accumulateurs.

L'unité électronique commande la reprise de la charge lorsque la tension de la batterie devient inférieure à un second seuil variable ou lorsque la variation en fonction du temps de la tension devient inférieure ou égale à un troisième seuil en valeur absolue. Le second seuil peut être variable, par exemple être égal à la dernière tension mesurée soustraite d'une tension prédéterminée. Un équilibrage de la charge entre les différents modules d'accumulateurs de la batterie peut ainsi avoir lieu jusqu'à ce que l'ensemble des modules d'accumulateurs ait atteint une tension de seuil correspondant à un état de charge de la batterie d'environ 100%.

Le système de l'invention est donc bien adapté pour la gestion de charge de batteries de type LiFePO₄ puisqu'il permet d'équilibrer l'ensemble des modules d'accumulateurs sans qu'un module d'accumulateurs ne dépasse la tension de seuil maximum.

Le système de gestion de l'invention permet un contrôle de la charge de la batterie à partir de mesures aux bornes de la batterie. Il n'est donc pas nécessaire de réaliser un câblage entre l'unité électronique et chaque dispositif de dérivation associé à chaque module d'accumulateurs. L'unité électronique du système de gestion selon l'invention peut alors être incorporée soit dans la batterie elle-même, soit dans un chargeur sans câblage complexe.

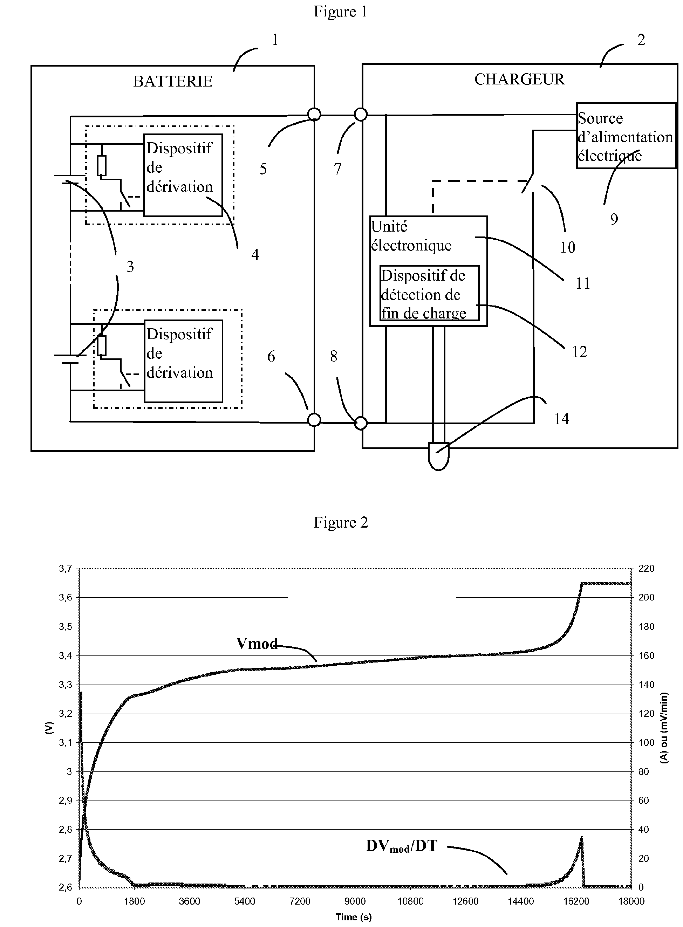

La figure 1 représente un schéma électrique d'un système de gestion de charge selon un premier mode de réalisation. Selon ce premier mode de réalisation, le système est intégré à un chargeur 2 destiné à être raccordé à une batterie 1 comportant des modules d'accumulateurs de type Li Ion comprennent une électrode positive contenant un matériau actif LiₓM_{y}P_{z}O₄₋ₜ dans lequel M est choisi dans le groupe comprenant Fe, Co, Ni, Mn, et un mélange de ceux-ci, x allant de 0.9 à 1.1 et y de 0.9 à 1.1, z allant de 0.9 à 1.1 et t allant de 0 à 0.4. Dans la suite de la description, les accumulateurs sont de type LiFePO₄.

Sur le schéma la batterie 1 comporte deux modules d'accumulateurs 3 montés en série mais pourrait en comporter un plus grand nombre. Chaque module 3 comporte un seul accumulateur mais pourrait en comporter plusieurs montés en parallèle les uns aux autres (non représenté). La batterie 1 comporte aussi un dispositif de dérivation 4 par module. La batterie 1 comporte enfin deux bornes 5 et 6 qui peuvent être raccordées à des bornes 7 et 8 du chargeur 2.

Le chargeur 2 comporte une source d'alimentation électrique 9, qui peut être un transformateur électronique ou magnétique. La source d'alimentation électrique 9 charge la batterie 1 en fournissant un courant constant. La source d'alimentation électrique 9 comprend deux sorties reliées chacune à une des bornes 7 et 8 du chargeur 2. Un contact 10 est monté en série entre une des sorties de la source d'alimentation électrique 9 et une des bornes 8 du chargeur 2. Le chargeur 2 charge la batterie à un régime de charge constant par le biais de la source d'alimentation électrique ; la source d'alimentation électrique 9 alimente la batterie avec un courant constant.

Selon ce premier mode de réalisation, le chargeur comprend aussi un système de gestion de charge comprenant une unité électronique 11 et des moyens de mesure de la tension aux bornes de la batterie 1. L'unité électronique 11 peut être alimentée par source d'alimentation électrique la batterie par le biais des branches des moyens de mesures ou directement par la source d'alimentation électrique 9. L'unité électronique 11 peut commander l'ouverture et la fermeture du contact 10. L'ouverture du contact 10 interrompt la connexion électrique entre la batterie 1 et la source d'alimentation électrique 9 et donc interrompt la charge de la batterie 1.

Les moyens de mesure peuvent être intégrés dans l'unité électronique 11 qui est alors montée en parallèle aux bornes 7 et 8 du chargeur afin de mesurer la tension Vbat aux bornes 5 et 6 de la batterie 1 lorsque le chargeur 2 est relié à la batterie 1. Le contact 10 est situé entre la source d'alimentation électrique 9 et une des branches permettant aux moyens de mesure de mesurer la tension de la batterie. Cela permet aux moyens de mesure de tension de mesurer la tension de la batterie même lorsque le contact 10 est ouvert.

L'unité électronique 11 calcule la variation en fonction du temps de la tension Vbat mesurée. L'unité électronique 11 peut par exemple inclure un dérivateur, la variation en fonction du temps est alors la dérivée de la tension. L'unité électronique 11 peut aussi calculer la variation en fonction du temps de la tension en comparant deux tensions mesurées successivement dans une période de temps prédéterminée ΔV/Δt. On entend par période de temps prédéterminée le temps qui s'écoule entre deux mesures de tensions. La période de temps prédéterminée peut être fixe ou peut être fonction du régime de charge. Par exemple, pour une batterie de type LiFePO₄ chargée avec un régime de charge constant de C/5, la période de temps prédéterminée peut être compris entre 10 secondes et 120 secondes.

L'unité électronique 11 compare la variation en fonction du temps de la tension à un premier seuil et commande l'interruption de la charge si cette variation en fonction du temps est supérieure ou égale au premier seuil. Selon les modes de réalisation, l'unité électronique 11 peut comparer la variation en fonction du temps de la tension avec un premier seuil fixe prédéterminé ou avec un premier seuil variable.

Un premier seuil fixe est prédéterminé en fonction du régime de charge de la batterie. Dans le cas d'un premier seuil fixe, l'unité électronique peut calculer la variation en fonction du temps soit continuellement, soit dans un intervalle de temps. Par exemple, si la période de temps prédéterminée est égale à 10 secondes, et que le système de gestion doit interrompre la charge lorsque la variation de la tension en fonction du temps atteint 30mV/min, le seuil fixe sera alors de 5.

Dans le cas d'un premier seuil variable, l'unité électronique 11 calcule les variations en fonction du temps dans un intervalle de temps. On entend par intervalle de temps le temps s'écoulant entre deux calculs de variation en fonction du temps de tension. L'intervalle de temps entre deux calculs successifs pour une batterie de type LiFePO₄ chargée avec un régime de charge de C/5, peut être compris entre 10 secondes et 120 secondes. Dans le cas d'un premier seuil variable, l'unité électronique mémorise la plus petite variation en fonction du temps calculée lors de la charge de la batterie. Le premier seuil variable est égal à un nombre de fois la plus petite variation en fonction du temps de tension calculée. Il compare donc la dernière variation de la tension en fonction du temps calculée avec celle mémorisée et commande l'interruption de la charge si la variation en fonction du temps est supérieure ou égale à par exemple vingt, fois la plus petite variation en fonction du temps calculée durant la charge de la tension.

Le système de gestion selon l'invention peut donc déterminer si un module d'accumulateurs d'une batterie de type LiFePO₄ est en fin de charge. En effet, comme expliqué plus haut, les modules d'accumulateurs de type LiFePO₄ ont une tension qui augmente plus rapidement durant la partie fin de charge que durant la partie intermédiaire. Cette brusque augmentation de la tension est perceptible par le système de gestion selon l'invention. Par augmentation brusque en fin de charge on entend une augmentation de la tension aux bornes de l'accumulateur au moins 10 fois supérieure pour la partie en fin de charge que pour la partie intermédiaire.

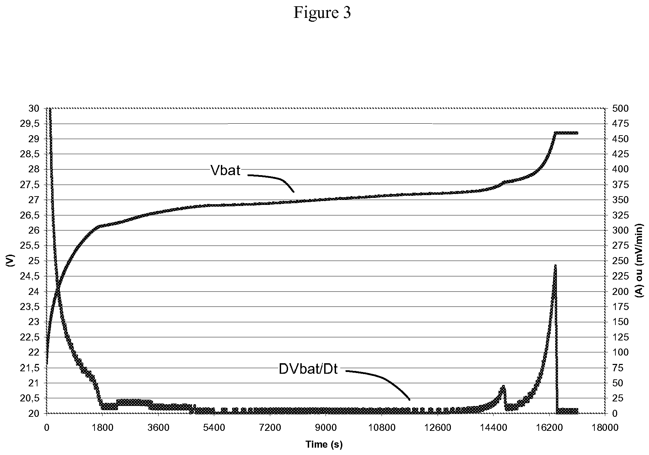

Les figures 2 et 3 sont des graphiques représentant respectivement la tension Vacc aux bornes d'un module accumulateurs de type LiFePO₄ comportant un seul accumulateur en charge et la tension Vbat aux bornes d'une batterie en charge comportant 8 modules d'accumulateurs en série comportant chacun un seul accumulateur de type LiFePO₄.

Le graphique de la figure 2 représente deux courbes ; une première courbe à lire avec l'axe des ordonnées situé à gauche et représentant la tension Vmod en volt aux bornes du module d'accumulateurs en fonction du temps exprimé en secondes, et la seconde courbe à lire avec l'axe des ordonnées situé à droite représentant la dérivée en fonction du temps DV_{mod}/Dt de la première courbe exprimée en millivolts par minute (mV/min). La première courbe montre l'évolution en fonction du temps de la tension Vmod aux bornes d'un module d'accumulateurs de type LiFePO₄ en charge et la seconde courbe représente la variation en fonction du temps de la tension Vmod. La première courbe montre que la tension Vmod aux bornes d'un module d'accumulateurs LiFePO₄ augmente brutalement en fin de charge. Le graphique de la figure 2 montre que la variation en fonction du temps de la tension DV_{mod}/Dt peut atteindre 37 mV/min alors que durant la charge, cette variation en fonction du temps était quasi nulle, de l'ordre de 0,9 mV/min.

De même, le graphique de la figure 3 représente deux courbes portant les mêmes unités que le graphique de la figure 2 et montre l'évolution en fonction du temps de la tension Vbat aux bornes d'une batterie en charge comportant huit modules d'accumulateurs de type LiFePO₄ comportant chacun un seul accumulateur et la dérivée en fonction du temps DV_{bat}/Dt de la tension aux bornes de la batterie. Sur la simulation de la figure 3, un des modules d'accumulateurs présente un état de charge supérieur de 10 % par rapport aux sept autres modules d'accumulateurs. On constate que la tension aux bornes de la batterie augmente brutalement lorsqu'un module d'accumulateurs est dans la partie fin de charge, même si les autres modules d'accumulateurs sont encore dans la partie intermédiaire. La comparaison des figures 2 et 3 permet de constater que l'augmentation brutale de la tension aux bornes de la batterie apparaît au même moment que l'augmentation brutale de la tension aux bornes d'un module d'accumulateurs en fin de charge. La mesure de la tension aux bornes de la batterie - plutôt qu'aux bornes de chaque module d'accumulateurs - est donc bien un paramètre exploitable pour le système et procédé de l'invention.

Ainsi, l'unité électronique peut, à partir de la mesure de la tension aux bornes de la batterie et du calcul de la variation en fonction du temps de cette tension, déterminer si un module d'accumulateurs est en fin de charge en comparant la variation calculée en fonction du temps de la tension aux bornes de la batterie DV_{bat}/Dt au premier seuil.

Comme décrit plus haut le premier seuil peut être fixe et prédéterminé, représentatif d'une variation en fonction du temps de la tension d'un module d'accumulateurs en phase de fin de charge. Par exemple pour une batterie en charge avec un régime de charge de C/5 A (où C est la capacité nominal de la batterie et 5 le nombre d'heures de charge pour recharger la batterie jusqu'à sa capacité nominal) le premier seuil peut être compris entre 30 et 40 mV/min. Ce premier seuil est à déterminer en fonction du courant de charge (ou régime de charge) car plus le régime de charge est grand, plus la variation en fonction du temps de la tension est grande pour la partie intermédiaire (et en fin de charge). Le premier seuil peut aussi être égal à 50mV/min, 75mV/min, 80mV/min etc... L'unité électronique peut aussi calculer la variation en fonction du temps de la tension seulement si la tension mesurée aux bornes de la batterie est supérieure ou égale à un certain seuil de tension. Le seuil de tension peut être une tension correspondant à une tension de la batterie lorsque celle-ci est dans la partie intermédiaire. Ce seuil de tension permet d'éviter que l'unité électronique commande l'interruption de la charge de la batterie alors que celle-ci est avant la partie intermédiaire. En effet, comme nous pouvons le voir sur la figure 3, la variation en fonction du temps de la tension est rapide pour les états de charge inférieurs à environ 10%.

Le premier seuil peut aussi être variable, par exemple égal à vingt fois la plus petite variation en fonction du temps de tension calculée sur une période de temps Dt précédente durant la charge de la batterie. Pour cela l'unité électronique mémorise la plus petite variation en fonction du temps calculée lors de la charge de la batterie. Par exemple si la plus petite variation en fonction du temps de la tension calculée est de 1,5mV/min ce qui correspond à la variation en fonction du temps durant la partie intermédiaire pour une batterie en charge avec un régime de charge de C/5 A, dés que l'unité électronique calcule une variation supérieure ou égale à 30mV/min il commande l'interruption de la charge. La variation en fonction du temps peut aussi être égale à au moins dix fois, de préférence trente fois, la plus petite variation en fonction du temps calculée durant la charge de la batterie. Le fait que le premier seuil soit variable permet de s'adapter au régime de charge de la batterie. Ainsi, le système de gestion peut commander l'interruption de la charge selon différent régime de charge et peut calculer la variation en fonction du temps de la tension dés le début de la charge. La plus petite variation en fonction du temps de la tension calculée mémorisée est effacée de la mémoire lors de la déconnection entre la batterie et le chargeur ou lorsque la batterie n'est plus mise en charge depuis un laps de temps prédéterminée.

Dans le cas d'un premier seuil variable, il est préférable que le système de gestion ait aussi un seuil fixe limite permettant à l'unité électronique d'interrompre la charge si la variation en fonction du temps de la tension calculée est supérieure à ce seuil de tension fixe limite. Le seuil fixe limite est d'une part, inférieur à la variation en fonction du temps de la tension en fin de charge d'un module lorsque son SOC est à 100% pour un régime de charge minimal et est d'autre part, supérieur au premier seuil variable (dont la plus petite variation en fonction du temps de la tension calculée est calculée durant la période intermédiaire) pour un régime de charge maximal. Par régime de charge minimal et maximal on entend le plus petit ou plus grand régime de charge que peut appliquer le chargeur à la batterie ou qui peut être appliquée à la batterie. Ce seuil de tension limite fixe permet d'interrompre la charge même si la batterie est mise en charge alors que celle-ci comprend un module déjà en fin de charge. En effet, dans ce cas, la plus petite variation en fonction du temps de tension calculée sera une variation en fonction du temps d'un module en fin de charge et sera donc supérieure à la variation en fonction du temps de la charge durant la période intermédiaire. Le premier seuil variable peut donc être supérieur à la variation en fonction du temps de la tension d'un module dont le SOC est de 100%, ce qui peut créer un risque d'emballement thermique si la charge n'est pas interrompue. Le seuil fixe limite permet donc d'interrompre la charge avant qu'un risque d'emballement thermique se produise.

Par exemple, pour une batterie d'accumulateurs de type LiFePO₄ et un chargeur qui peut charger la batterie entre un régime de charge de C/5 et C, le premier seuil variable peut être égal à 20 fois la plus petite variation en fonction du temps de la tension calculée et le premier seuil fixe peut être égal à 50mV/min.

Lorsque la variation en fonction du temps de la tension aux bornes de la batterie DV_{bat}/Dt est supérieure au premier seuil, l'unité électronique 11 commande l'ouverture du contact 10 pour interrompre la liaison électrique entre une sortie de la source d'alimentation électrique 9 et une des bornes du chargeur 2. L'ouverture du contact 10 permet donc d'interrompre la charge de la batterie 1.

Le dispositif de dérivation 4 associé au module 3 en fin de charge ferme un circuit de dérivation aux bornes du module 3 lorsque sa tension atteint un seuil de dérivation prédéterminé. Le seuil de dérivation peut être par exemple une tension correspondant à un SOC d'environ 90% de l'accumulateur. La décharge du module permet une reprise de la charge de l'ensemble des accumulateurs 3 en toute sécurité en évitant que lors de cette reprise, un des modules soit immédiatement dans un état de surcharge. Le seuil de dérivation est donc prédéterminé afin que le dispositif de dérivation ferme le circuit de dérivation avant que l'unité électronique commande l'interruption de la charge. La fermeture du circuit de dérivation s'opère donc avant que la détection du premier seuil par l'unité électronique ait lieu. La fermeture du circuit de dérivation permet donc au module de se décharger lorsque le premier seuil est détecté.

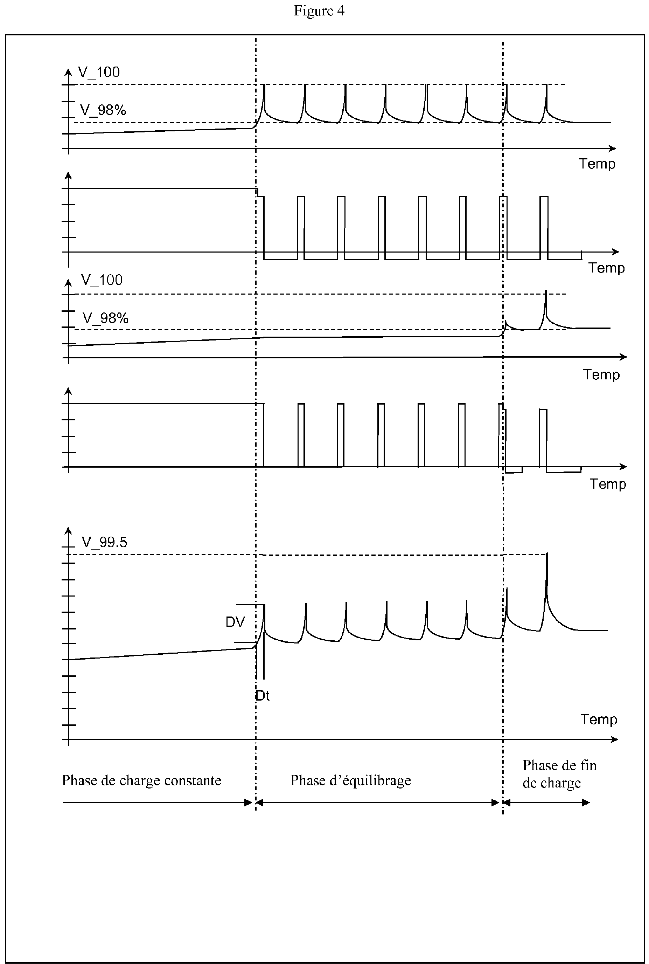

La figure 4 montre un chronogramme représentant la gestion de la charge d'une batterie de type LiFePO₄ par un système selon l'invention. Sur la figure 4, on fait référence à deux modules d'accumulateurs Mod1 et Mod2 comportant chacun un seul accumulateur mais il est entendu que la batterie peut comporter plus de deux modules d'accumulateurs et que chaque module peut comporter plus qu'un seul accumulateur. Le chronogramme de la figure 4 représente cinq graphiques avec la même échelle de temps. Un premier et un second graphique représentent respectivement la tension V_{mod1} aux bornes du premier module Mod1 et le courant I_{mod1} traversant ce dernier. Un troisième et un quatrième graphique représentent respectivement la tension V_{mod2} aux bornes du deuxième module Mod2 et le courant I_{mod2} traversant ce dernier. Enfin, le cinquième graphique représente la tension Vbat aux bornes de la batterie.

Durant une première phase de charge l'ensemble des accumulateurs de la batterie se charge; la tension aux bornes de la batterie augmente régulièrement; la variation en fonction du temps de la tension aux bornes de la batterie est faible.

Durant une deuxième phase, dite d'équilibrage, le premier module Mod1 atteint une tension correspondant à sa fin de charge alors que le second module Mod2 est encore dans la première phase de charge. On remarque notamment que la tension V_{mod1} aux bornes du premier module Mod1 augmente brutalement et que cette augmentation brutale se reporte sur la tension aux bornes de la batterie. Lors de cette augmentation brutale de la tension V_{mod1}, la tension V_{mod1} atteint le seuil de dérivation et le dispositif de dérivation du premier module Mod1 dérive alors une partie du courant de charge dans le circuit de dérivation; on remarque donc une baisse du courant I_{mod1} qui à lieu au même moment que l'augmentation brutale de la tension V_{mod1} .Comme indiqué plus haut, lorsque l'unité électronique du système de gestion de charge selon l'invention détecte une variation en fonction du temps de la tension aux bornes de la batterie DV/Dt supérieure à un premier seuil, elle interrompt la charge.

Le dispositif de dérivation du premier module Mod1 va alors décharger ce premier module Mod1 ; on remarque une valeur négative de courant sur le graphe I_{mod1}_et une chute de tension sur le graphe V_{mod1}. Le courant I_{mod2} dans le deuxième module Mod2 est simplement nul, du fait de l'interruption de la charge, et la tension à ses bornes V_{mod2} est maintenue sensiblement constante car le dispositif de dérivation associé à ce deuxième module Mod2 n'est pas activé. Le dispositif de dérivation 4 ferme un circuit de dérivation si la tension V_{mod1} est supérieure à une tension prédéterminée (le seuil de dérivation) et rouvre le circuit de dérivation lorsque la tension V_{mod1} devient inférieure à une autre tension prédéterminée (seuil d'arrêt). Dans l'exemple du chronogramme de la figure 4, le seuil de dérivation est égale à la tension du module lorsque son état de charge SOC atteint 98%, soit environ 3,57V pour un module comprenant un accumulateur de 3,65V lorsque son SOC=100%. La décharge du premier module Mod1 alors que la charge de la batterie est interrompue entraîne une chute de tension aux bornes de la batterie Vbat. Cette variation négative en fonction du temps de la tension aux bornes de la batterie peut être mesurée par l'unité électronique du système de gestion. Ainsi, lorsque la tension aux bornes de la batterie devient inférieure à un second seuil ou lorsque la variation en fonction du temps de cette tension devient inférieure à un troisième seuil en valeur absolue, l'unité électronique du système de gestion commande la reprise de la charge. La phase d'équilibrage peut ainsi comprendre plusieurs étapes d'interruption de la charge, décharge du module en fin de charge et reprise de la charge comme illustré sur le chronogramme de la figure 4.

Selon un mode de réalisation, lorsque la charge est interrompue, l'unité électronique du système de gestion peut mesurer en permanence la tension Vbat aux bornes de la batterie et la comparer avec le second seuil. Ce second seuil peut par exemple, être égal à la tension aux bornes de la batterie avant interruption de la charge soustraite d'une tension prédéterminée. Lorsque la tension aux bornes de la batterie devient inférieure à ce second seuil, l'unité électronique 11 commande la fermeture du contact 10 et la charge des modules 3 est reprise. Selon un autre mode de réalisation, l'unité électronique 11 commande la reprise de la charge de la batterie 1 lorsque la variation en fonction du temps de la tension aux bornes de la batterie 1 est égale ou supérieure à un troisième seuil négatif - ou inférieure à un troisième seuil en valeur absolue. En effet, comme on peut le voir sur le dernier graphe du chronogramme de la figure 4, la tension aux bornes de la batterie (soit une dérivée négative), lorsqu'un module est déchargé par un dispositif de dérivation, chute rapidement puis cette chute ralentit. En particulier, la tension diminue plus doucement lorsque le module déchargé par un dispositif de dérivation revient dans une zone de charge constante. L'unité électronique 11 peut donc calculer la variation en fonction du temps de la tension (négative) lors des décharges en phase d'équilibrage et la comparer à un troisième seuil correspondant à une variation en fonction du temps de tension de retour à une phase de charge constante. Ce troisième seuil peut être variable, par exemple le troisième seuil peut être soit égal à une variation en fonction du temps de la tension dix fois inférieure à la variation en fonction du temps de tension précédente. Ce troisième seuil peut aussi être fixe par exemple égal à environ zéro, ainsi lorsque la tension de la batterie reste stable, l'unité électronique commande la reprise de la charge. La tension de la batterie reste stable par exemple lorsque tous les dispositifs de dérivation ont leurs circuits ouverts (c'est-à-dire lorsque la tension aux bornes de tous les modules d'accumulateurs est inférieure au seuil d'arrêt du dispositif de dérivation). Le chronogramme de la figure 4 montre aussi une troisième phase, dite phase de fin de charge, durant laquelle tous les dispositifs de dérivation 4 sont activés.

Le système de gestion selon l'invention peut comprendre en outre un dispositif de détection de fin de charge 12 qui mesure la tension aux bornes de la batterie 1 constamment et commande l'arrêt de la charge lorsque la tension Vbat aux bornes de la batterie 1 atteint un quatrième seuil correspondant à une tension de fin de charge de l'ensemble des modules 3 de la batterie. Le dispositif de détection de fin de charge 12 peut arrêter la charge en commandant l'ouverture du contact 10 ou en envoyant une information électrique à la source d'alimentation électrique 9 qui arrête de charger en réponse à cette information. Sur le chronogramme de la figure 4, ce quatrième seuil correspond à un SOC de la batterie de 99,5%.

Selon un autre mode de réalisation, le système de gestion comprend un dispositif de détection de fin d'équilibrage (non représenté) qui mesure la tension aux bornes de la batterie 1 constamment et envoie une information à la source d'alimentation électrique 9 afin que celle-ci passe d'un mode de phase de charge à courant constant à un mode de phase de charge à tension constante lorsque la tension mesurée Vbat aux bornes de la batterie atteint le quatrième seuil précédemment décrit. Par mode de phase de charge à tension constante, on entend que la source d'alimentation électrique 9 charge la batterie 1 en appliquant une tension constante. La tension constante est de préférence la tension que doit délivrer la batterie 1 lorsque son SOC est à 100%. Ainsi, lorsque la source d'alimentation électrique 9 est en mode de phase de charge à tension constante, le courant de charge diminue au fur et à mesure que la tension de la batterie augmente pris individuellement augmente. Le dispositif de détection de fin d'équilibrage peut arrêter la charge lorsqu'il détecte la fin de charge. Le dispositif de détection de fin d'équilibrage détecte la fin de charge, soit lorsque le courant traversant un module de charge atteint une valeur inférieure ou égale à un seuil prédéfini par exemple entre C/50 et C/100 inclus pour un module d'accumulateurs, soit lorsque la durée de la charge de la batterie après avoir envoyé l'information à la source d'alimentation électrique (c'est-à-dire en mode de tension constante) atteint une durée prédéterminée. Le dispositif de détection de fin d'équilibrage peut arrêter la charge soit en commandant l'ouverture du contact 10 soit en envoyant une information électrique à la source d'alimentation électrique 9 qui arrête de charger en réponse à cette information. Ainsi, la batterie est chargée jusqu'à ce que son état de charge soit compris entre 99,5% et 100%.

L'unité électronique 11 du système de gestion peut incorporer le dispositif de détection de fin de charge 12 ou le dispositif de détection de fin d'équilibrage.

Le dispositif de détection de fin de charge 12 ou le dispositif de détection de fin d'équilibrage peut commander la fermeture du contact 10 lorsque la tension aux bornes du chargeur 2 est équivalente à zéro volt, c'est-à-dire lorsque la batterie 1 est déconnectée du chargeur 2. Cette fermeture du contact 10 permet de remettre en position initiale le système de gestion pour une charge ultérieure de la batterie 1.

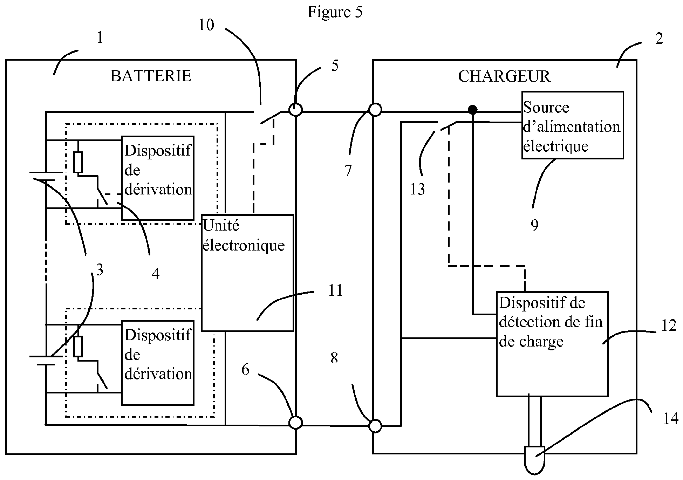

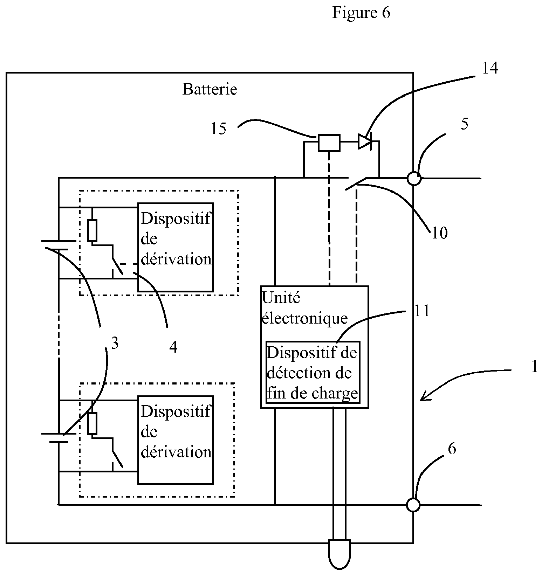

Les figures 5 et 6 représentent respectivement un schéma électrique d'un système de gestion de charge selon un deuxième et troisième mode de réalisation. Selon ce deuxième et troisième mode de réalisation, le système est intégré à la batterie 1 au lieu du chargeur 2. Les mêmes éléments que ceux décrits en référence à la figure 1 portent les mêmes numéros de référence et ne sont pas décrits en détails. L'unité électronique 11 du système de gestion est alors montée aux bornes de l'ensemble des modules 3.

Le contact 10 pourrait rester dans le chargeur 2 mais cela implique de rajouter une connectique entre le chargeur 2 et la batterie 1 afin que l'unité électronique 11 puisse commander le contact 10 selon le procédé de gestion décrit ci-dessus. Sur les figures 5 et 6, le contact 10 est incorporé dans la batterie 1, monté entre une borne de la batterie 1 et l'unité électronique 11. L'unité électronique 11 est donc reliée à une des bornes de la batterie 1 par le biais du contact 10. Cet agencement permet au contact 10 d'interrompre la charge tout en permettant à l'unité électronique 11 de continuer à mesurer la tension de l'ensemble des modules 3.

Sur la figure 5, le dispositif de détection de fin de charge 12 est dans le chargeur 2, il commande un autre contact 13 incorporé dans le chargeur 2 et fonctionne de la même façon que celle expliquée ci-dessus. Le dispositif de détection de fin de charge 12 pourrait aussi être incorporé dans la batterie 1, par exemple dans l'unité électronique 11. Le dispositif de détection de fin de charge 12 ne peut alors plus mesurer la tension aux bornes 7 et 8 du chargeur 2 pour savoir si le chargeur 2 est déconnecté de la batterie 1. En conséquence, le contact 10 pourrait rester ouvert et la batterie 1 ne pourrait alors pas fournir d'énergie à une application extérieure. Dans un autre mode de réalisation, le dispositif de détection de fin de charge 12 est remplacé par le dispositif de détection de fin d'équilibrage déjà expliqué. Le dispositif de détection de fin d'équilibrage commande alors le contact 13 incorporé dans le chargeur lorsqu'il a détecté la fin de charge.

La figure 6 représente un troisième mode de réalisation, dans lequel le dispositif de détection de fin de charge 12 est incorporé incorporée dans la batterie. Dans le mode réalisation de la figure 6, le dispositif de détection de fin de charge 12 est incorporé dans l'unité électronique 11. Pour résoudre le problème mentionné ci-dessus, un circuit comprenant une diode 14 est monté en parallèle au contact 10. La diode 14 est montée passante pour le courant de décharge et permet donc à la batterie de fournir de l'électricité à une application extérieure. Ainsi, l'ouverture du contact 10 permet toujours d'interrompre la charge. Le circuit comprend aussi un dispositif de mesure 15 de courant monté en série avec la diode 14. Le dispositif de mesure 15 de courant informe le dispositif de détection de fin de charge lorsqu'il détecte un courant qui traverse la diode 14. Le dispositif de détection de fin de charge commande alors la fermeture du contact 10 et permet ainsi de refermer le contact 10 lorsque la batterie 1 alimente une application extérieure afin de replacer le contact en position initiale fermée pour une connexion ultérieure à un chargeur. Dans un autre mode de réalisation, le dispositif de détection de fin de charge 12 est remplacé par le dispositif de détection de fin d'équilibrage déjà expliqué. Le circuit comprenant une diode 14 et le dispositif de mesure 15 sont montés dans la batterie de la même manière que décrit plus haut sauf en ce que c'est le dispositif de détection de fin d'équilibrage qui reçoit l'information provenant du dispositif de mesure 15. Le dispositif de fin d'équilibrage commande alors la fermeture du contact 10 lorsque un courant traverse la diode 14.

Selon un autre mode de réalisation non représenté, le dispositif de mesure 15 peut commander directement la fermeture (sans passer par le biais du dispositif de détection de fin de charge 12 ou du dispositif de détection de fin d'équilibrage) du contact 10 lorsqu'il détecte un courant traversant le circuit.

Dans les différents modes de réalisation, l'unité électronique 11 peut commander la fermeture et l'ouverture du contact 10 en transmettant un signal électrique à un dispositif d'arrêt (non représenté) contrôlant le contact 10. L'unité électronique 11 peut aussi commander la fermeture et l'ouverture du contact 10 en contrôlant mécaniquement le contact 10.

Le contact 10 peut être de toute forme permettant d'interrompre ou le passage du courant le traversant. Le contact 10 peut être un transistor, un thyristor, un interrupteur etc...

Dans les différents modes de réalisation, le système de gestion peut comprendre une diode électroluminescente 14 reliée au dispositif de détection de fin de charge 12 ou au dispositif de détection de fin d'équilibrage. La diode 14 est allumée par le dispositif de détection de fin de charge 12 lorsque la tension mesurée est supérieure ou égale au quatrième seuil ou est allumée lorsque le dispositif de détection de fin d'équilibrage détecte la fin de charge. Cela permet que l'utilisateur soit alerté de la fin de charge de la batterie.

Dans les différents modes de réalisation, les seuils prédéterminés sont choisis en fonction du régime de charge et du type d'accumulateur.

Bien entendu, la présente invention n'est pas limitée aux exemples et aux modes de réalisation décrits et représentés, l'invention est uniquement définie par les revendications annexées.

## Revendications

1. Ensemble comprenant :
a) une batterie (1) rechargeable comprenant :
- au moins deux modules d'accumulateurs (3) montés en série, les accumulateurs étant de type Li-ion et comprenant une électrode positive contenant un matériau actif de formule LiₓM_{y}P_{z}O₄₋ₜ dans laquelle M est choisi dans le groupe comprenant Fe, Co, Ni, Mn, et un mélange de ceux-ci, x allant de 0,9 à 1,1 ; y allant de 0,9 à 1,1 ; z allant de 0,9 à 1,1 et t allant de 0 à 0,4,
- un dispositif de dérivation (4) et un circuit de dérivation par module d'accumulateurs;
b)
- un chargeur (2) comprenant :
- des bornes (7, 8) destinées à être raccordées à la batterie rechargeable,
- une source d'alimentation électrique (9) destinée à fournir un courant constant,
c) un système de gestion de charge de la batterie rechargeable intégré à la batterie ou au chargeur, le système de gestion de charge comprenant :
- des moyens de mesure de la tension (Vbat) de la batterie (1) adaptés à mesurer la tension de la batterie lors d'une charge de la batterie à courant constant,
- une unité électronique (11) adaptée à calculer la variation en fonction du temps de la tension (Vbat),
le dispositif de dérivation étant adapté à dériver une partie du courant de charge d'un ou des modules lorsque la tension du ou des modules atteint un seuil de dérivation prédéterminé en fermant le circuit de dérivation aux bornes du module correspondant ;
l'unité électronique (11) étant adaptée à commander l'interruption de la charge de la batterie (1) lorsque la variation en fonction du temps de la tension (Vbat) est supérieure à un premier seuil ;
le circuit de dérivation étant adapté à décharger le ou les modules lorsque le premier seuil est atteint ;
dans lequel l'unité électronique (11) est adaptée à commander la reprise de la charge lorsque la tension (Vbat) de la batterie (1) est inférieure à un second seuil ; ou
dans lequel l'unité électronique (11) est adaptée à commander la reprise de la charge lorsque la variation en fonction du temps en valeur absolue de la tension (Vbat) est inférieure ou égale à un troisième seuil.

2. Ensemble selon la revendication 1, dans lequel le second seuil est égal à la tension de la batterie (Vbat) mesurée avant l'interruption de la charge moins une tension prédéterminée.

3. Ensemble selon la revendication 1 ou 2, dans lequel le troisième seuil est prédéterminé.

4. Ensemble selon l'une quelconque des revendications précédentes, dans lequel le premier seuil correspond à une variation en fonction du temps de la tension de la batterie (Vbat) au moins dix fois, de préférence au moins vingt, trente fois supérieure à la plus petite variation en fonction du temps calculée sur une période donnée durant la charge.

5. Ensemble selon l'une quelconque des revendications précédentes, le système de gestion de charge comprenant un dispositif de détection de fin de charge (12) de la batterie (1) destiné à commander l'arrêt de la charge de la batterie lorsque la tension de la batterie (Vbat) mesurée correspond à un quatrième seuil.

6. Ensemble selon l'une quelconque des revendications 1 à 4, le système de gestion de charge comprenant un dispositif de détection de fin d'équilibrage de la batterie destiné à envoyer une information à la source d'alimentation électrique lorsque la tension de la batterie mesurée (Vbat) aux bornes de la batterie atteint un quatrième seuil et destiné à arrêter la charge soit lorsque le courant de charge traversant un module de la batterie atteint une valeur inférieure ou égale à un seuil prédéfini de préférence entre C/50 et C/100 inclus pour un module d'accumulateurs, soit lorsque la durée de la charge de la batterie après avoir envoyé l'information à la source d'alimentation électrique atteint une durée prédéterminée.

7. Ensemble (1) selon l'une des revendications 1 à 6, dans lequel les accumulateurs présentent un profil de charge dans lequel durant une période de la charge comprise entre un état de charge de 30% et 80%, la variation en fonction du temps de la tension est en moyenne au moins 10 fois moins rapide, de préférence 20 fois moins rapide que la variation en fonction du temps de la tension durant une période de la charge comprise entre un état de charge de 95% et 100%.

8. Ensemble (1) selon l'une des revendications 1 à 7, dans lequel le matériau actif est LiFePO₄

9. Ensemble selon la revendication 6 ou selon l'une des revendications 7 à 8 quand elles dépendent de la revendication 6, dans lequel la source d'alimentation électrique (9) est destinée à changer de mode de charge en fournissant une tension constante à réception de l'information du dispositif de détection de fin d'équilibrage.

10. Procédé de gestion de la charge d'une batterie (1) rechargeable comportant au moins deux modules d'accumulateurs (3) reliés en série et un dispositif de dérivation et un circuit de dérivation par module d'accumulateurs, les accumulateurs étant de type Li-ion et comprenant une électrode positive contenant un matériau actif de formule LiₓM_{y}P_{z}O₄₋ₜ dans laquelle M est choisi dans le groupe comprenant Fe, Co, Ni, Mn, et un mélange de ceux-ci, x allant de 0,9 à 1,1 ; y allant de 0,9 à 1,1 ; z allant de 0,9 à 1,1 et t allant de 0 à 0,4, le procédé comprenant les étapes suivantes :
a) charger la batterie en fournissant un courant constant,
b) mesurer la tension (Vbat) de la batterie,
c) calculer la variation en fonction du temps de la tension de la batterie (Vbat) mesurée,
d) comparer la variation en fonction du temps de la tension (Vbat) calculée avec un premier seuil,
e) dériver une partie du courant de charge d'un ou plusieurs modules en fermant le circuit de dérivation aux bornes du ou des modules par le dispositif respectif de dérivation ; lorsque une tension du ou des modules atteint un seuil de dérivation prédéterminé,
f) interrompre la charge si la variation de la tension (Vbat) en fonction du temps calculée est supérieure au premier seuil,
g) décharger le ou les modules à travers des circuits de dérivation respectifs lorsque le premier seuil est atteint,
h) reprendre la charge si la tension (Vbat) de la batterie (1) devient inférieure à un second seuil ou si la variation en fonction du temps en valeur absolue de la tension (Vbat) de la batterie devient inférieure à un troisième seuil.

11. Procédé de gestion de la charge selon la revendication 10, comprenant une étape g') entre les étapes g) et h) consistant à interrompre la décharge du ou des modules lorsque la tension du ou des modules atteint un seuil d'arrêt.

12. Procédé de gestion de la charge selon la revendication 10 ou 11, dans lequel la tension (Vbat) de la batterie mesurée est mémorisée et dans lequel le second seuil est égal à la dernière tension (Vbat) de la batterie mémorisée moins une tension prédéterminée.

13. Procédé de gestion de la charge selon l'une quelconque des revendications 10 à 12, dans lequel le troisième seuil est prédéterminé.

14. Procédé de gestion de la charge selon l'une quelconque des revendications 10 à 13, dans lequel le premier seuil correspond à une variation en fonction du temps de la tension de la batterie (Vbat) au moins dix fois, de préférence au moins vingt, trente fois supérieure à la plus petite variation en fonction du temps calculée sur une période donnée durant la charge.

15. Procédé de gestion de la charge selon l'une quelconque des revendications 10 à 14, consistant en outre à comparer la tension de la batterie (Vbat) mesurée avec un quatrième seuil et comprenant une étape i) consistant à arrêter la charge si cette tension (Vbat) de la batterie mesurée est supérieure audit quatrième seuil.

16. Procédé de gestion de la charge selon l'une quelconque des revendications 10 à 14, consistant en outre à comparer la tension de la batterie (Vbat) mesurée avec un quatrième seuil et comprenant une étape i) consistant à modifier la charge de la batterie en fournissant une tension constante à la batterie si cette tension de la batterie (Vbat) mesurée est supérieure audit quatrième seuil.

## Patentansprüche

1. Anordnung, umfassend:
a) eine aufladbare Batterie (1), umfassend:
- mindestens zwei Akkumulatormodule (3), die in Serie montiert sind, wobei die Akkumulatoren vom Li-Ion-Typ sind, und umfassend eine positive Elektrode, die ein Aktivmaterial der Formel LiₓM_{y}P_{z}O₄₋ₜ enthält, wobei M in der Gruppe ausgewählt ist, umfassend Fe, Co, Ni, Mn und ein Gemisch derselben, wobei x von 0,9 bis 1,1 geht; wobei y von 0,9 bis 1,1 geht; wobei z von 0,9 bis 1,1 geht, und wobei t von 0 bis 0,4 geht,
- eine Abzweigungsvorrichtung (4) und eine Zweigleitung pro Akkumulatormodul;
b)
- ein Ladegerät (2), umfassend:
- Klemmen (7, 8), die dazu bestimmt sind, an die aufladbare Batterie angeschlossen sind,
- eine Stromquelle (9), die dazu bestimmt ist, konstanten Strom zu liefern,
c) ein System zum Steuern des Aufladens der aufladbaren Batterie, das in die Batterie oder das Ladegerät integriert ist, wobei das Aufladesteuerungssystem umfasst:
- Mittel zum Messen der Spannung (Vbat) der Batterie (1), die geeignet sind, die Spannung der Batterie bei einem Aufladen der Batterie mit Gleichstrom zu messen,
- eine elektronische Einheit (11), die geeignet ist, die zeitabhängige Variation der Spannung (Vbat) zu berechnen,
wobei die Abzweigungsvorrichtung geeignet ist, einen Teil des Ladestroms eines oder mehrerer Module abzuzweigen, wenn die Spannung des oder der Module einen vorbestimmten Abzweigungsgrenzwert erreicht, wobei die Zweigschaltung an den Klemmen des entsprechenden Moduls geschlossen wird;
wobei die elektronische Einheit (11) geeignet ist, die Unterbrechung des Aufladens der Batterie (1) zu steuern, wenn die zeitabhängige Variation der Spannung (Vbat) größer als ein erster Grenzwert ist;
wobei die Zweigschaltung geeignet ist, das oder die Module zu entladen, wenn der erste Grenzwert erreicht ist;
wobei die elektronische Einheit (11) geeignet ist, die Wiederaufnahme des Aufladens zu steuern, wenn die Spannung (Vbat) der Batterie (1) unter einem zweiten Grenzwert liegt; oder
wobei die elektronische Einheit (11) geeignet ist, die Wiederaufnahme des Aufladens zu steuern, wenn die zeitabhängige Variation im Absolutwert der Spannung (Vbat) kleiner oder gleich einem dritten Grenzwert ist.

2. Anordnung nach Anspruch 1, bei der der zweite Grenzwert gleich der Spannung der Batterie (Vbat), gemessen vor Unterbrechung des Ladens mindestens einer vorbestimmten Spannung, ist.

3. Anordnung nach Anspruch 1 oder 2, bei der der dritte Grenzwert vorbestimmt ist.

4. Anordnung nach einem der vorhergehenden Ansprüche, bei der der erste Grenzwert einer zeitabhängigen Variation der Spannung der Batterie (Vbat) mindestens zehnmal, vorzugsweise mindestens zwanzig-, dreißigmal über der kleinsten zeitabhängigen Variation, die über einen gegebenen Zeitraum während des Aufladens berechnet wird, entspricht.

5. Anordnung nach einem der vorhergehenden Ansprüche, wobei das Aufladesteuerungssystem eine Vorrichtung zur Erfassung des Endes des Aufladens (12) der Batterie (1) umfasst, die dazu bestimmt ist, den Stopp des Aufladens der Batterie zu steuern, wenn die gemessene Spannung der Batterie (Vbat) einem vierten Grenzwert entspricht.

6. Anordnung nach einem der Ansprüche 1 bis 4, wobei das Aufladesteuerungssystem eine Vorrichtung zur Erfassung des Endes des Ausgleichs der Batterie umfasst, die dazu bestimmt ist, eine Information an die Stromquelle zu senden, wenn die an den Klemmen der Batterie gemessene Spannung der Batterie (Vbat) einen vierten Grenzwert erreicht, und die dazu bestimmt ist, das Aufladen zu stoppen, entweder wenn der ein Modul der Batterie durchquerende Ladestrom einen Wert kleiner oder gleich einem vordefinierten Grenzwert, vorzugsweise zwischen C/50 und C/100, inklusive für ein Akkumulatormodul erreicht, oder wenn die Dauer des Aufladens der Batterie, nachdem die Information an die Stromquelle gesandt wurde, eine vorbestimmte Dauer erreicht.

7. Anordnung (1) nach einem der Ansprüche 1 bis 6, bei der die Akkumulatoren ein Ladeprofil aufweisen, bei dem während eines Zeitraums des Aufladens zwischen einem Ladestand von 30 % und 80 % die zeitabhängige Variation der Spannung im Durchschnitt mindestens zehnmal weniger, vorzugsweise zwanzigmal weniger schnell als die zeitabhängige Variation der Spannung während eines Zeitraums des Aufladens zwischen einem Ladestand von 95 % und 100 % ist.

8. Anordnung (1) nach einem der Ansprüche 1 bis 7, bei dem das Aktivmaterial LiFePO₄ ist.

9. Anordnung nach Anspruch 6 oder nach einem der Ansprüche 7 bis 8, wenn sie von Anspruch 6 abhängen, bei der die Stromquelle (9) dazu bestimmt ist, den Lademodus zu wechseln, wobei eine konstante Spannung bei Empfang der Information von der Vorrichtung zur Erfassung des Ausgleichsendes geliefert wird.

10. Verfahren zur Steuerung des Aufladens einer aufladbaren Batterie (1), umfassend mindestens zwei Akkumulatormodule (3), die in Serie montiert sind, und eine Abzweigungsvorrichtung und eine Zweigleitung pro Akkumulatormodul, wobei die Akkumulatoren vom Li-Ion-Typ sind, und umfassend eine positive Elektrode, die ein Aktivmaterial der Formel LiₓM_{y}P_{z}O₄₋ₜ enthält, wobei M in der Gruppe ausgewählt ist, umfassend Fe, Co, Ni, Mn und ein Gemisch derselben, wobei x von 0,9 bis 1,1 geht; wobei y von 0,9 bis 1,1 geht; wobei z von 0,9 bis 1,1 geht, und wobei t von 0 bis 0,4 geht,
wobei das Verfahren die folgenden Schritte umfasst:
a) Aufladen der Batterie bei Lieferung von Gleichstrom,
b) Messen der Spannung (Vbat) der Batterie,
c) Berechnen der zeitabhängigen Variation der gemessenen Spannung der Batterie (Vbat),
d) Vergleichen der zeitabhängigen Variation der berechneten Spannung (Vbat) mit einem ersten Grenzwert,
e) Abzweigen eines Teils des Ladestroms eines oder mehrerer Module, wobei die Zweigschaltung an den Klemmen des oder der Module durch die jeweilige Abzweigungsvorrichtung geschlossen wird, wenn eine Spannung des oder der Module einen vorbestimmten Abzweigungsgrenzwert erreicht,
f) Unterbrechen des Aufladens, wenn die zeitabhängige Variation der berechneten Spannung (Vbat) über einem ersten Grenzwert liegt,
g) Entladen des oder der Module über die jeweiligen Zweigschaltungen, wenn der erste Grenzwert erreicht ist,
h) Wiederaufnehmen des Aufladens, wenn die Spannung (Vbat) der Batterie (1) unter einen zweiten Grenzwert fällt, oder wenn die zeitabhängige Variation im Absolutwert der Spannung (Vbat) der Batterie unter einen dritten Grenzwert fällt.

11. Verfahren zur Steuerung des Aufladens nach Anspruch 10, umfassend einen Schritt g') zwischen den Schritten g) und h), darin bestehend, das Entladen des oder der Module zu unterbrechen, wenn die Spannung des oder der Module ein Stoppniveau erreicht.

12. Verfahren zur Steuerung des Aufladens nach Anspruch 10 oder 11, bei dem die gemessene Spannung (Vbat) der Batterie gespeichert wird, und bei dem der zweite Grenzwert gleich der letzten gespeicherten Spannung (Vbat) der Batterie weniger eine vorbestimmte Spannung ist.

13. Verfahren zur Steuerung des Aufladens nach einem der Ansprüche 10 bis 12, bei dem der dritte Grenzwert vorbestimmt ist.

14. Verfahren zur Steuerung des Aufladens nach einem der Ansprüche 10 bis 13, bei dem der erste Grenzwert einer zeitabhängigen Variation der Spannung der Batterie (Vbat) entspricht, die mindestens zehnmal, vorzugsweise mindestens zwanzig-, dreißigmal höher als die kleinste berechnete zeitabhängige Variation über einen gegebenen Zeitraum während des Aufladens ist.

15. Verfahren zur Steuerung des Aufladens nach einem der Ansprüche 10 bis 14, ferner darin bestehend, die gemessene Spannung der Batterie (Vbat) mit einem vierten Grenzwert zu vergleichen, und umfassend einen Schritt i), darin bestehend, das Aufladen zu stoppen, wenn diese gemessene Spannung der Batterie (Vbat) höher als der vierte Grenzwert ist.

16. Verfahren zur Steuerung des Aufladens nach einem der Ansprüche 10 bis 14, ferner darin bestehend, die gemessene Spannung der Batterie (Vbat) mit einem vierten Grenzwert zu vergleichen, und umfassend einen Schritt i), darin bestehend, das Aufladen der Batterie zu verändern, wobei eine konstante Spannung an die Batterie geliefert wird, wenn diese gemessene Spannung der Batterie (Vbat) höher als der vierte Grenzwert ist.

## Claims

1. An assembly including:
a)
- a rechargeable battery (1) comprising:
- at least two storage cell modules (3) connected in series, the storage cells being of the Li-ion type and comprising a positive electrode containing an active material of formula LiₓM_{y}P_{z}O₄₋ₜ in which M is chosen from the group comprising Fe, Co, Ni, Mn, and a mixture thereof, x ranging from 0.9 to 1.1; y ranging from 0.9 to 1.1; z ranging from 0.9 to 1.1 and t ranging from 0 to 0.4,
- a bypass device (4) and a bypass circuit per storage cell module;
b)
- a charger (2) comprising:
- terminals (7, 8) intended to be connected to the rechargeable battery,
- an electrical power source (9) intended to provide a constant current,
c)
- a charge management system for the rechargeable battery integrated into the battery or charger, the charge management system comprising:
- means for measuring the voltage (Vbat) of the battery (1) suitable for measuring the voltage of the battery when the battery is charged at constant current,
- an electronic unit (11) adapted to calculate the variation as a function of time of the voltage (Vbat),
the bypass device being adapted to divert part of the charging current of one or more modules when the voltage of the module(s) reaches a predetermined bypass threshold by closing the bypass circuit at the terminals of the corresponding module;
the electronic unit (11) being adapted to control the interruption of the charging of the battery (1) when the variation as a function of time of the voltage (Vbat) is greater than a first threshold;
the bypass circuit being adapted to discharge the module or modules when the first threshold is reached;
wherein the electronic unit (11) is suitable for controlling the resumption of charging when the voltage (Vbat) of the battery (1) is below a second threshold; or
in which the electronic unit (11) is adapted to control the resumption of charging when the variation as a function of time in absolute value of the voltage (Vbat) is less than or equal to a third threshold.

2. The assembly of claim 1, wherein the second threshold is equal to the battery voltage (Vbat) measured before the interruption of the charge minus a predetermined voltage.

3. An assembly according to claim 1 or 2, wherein the third threshold is predetermined.

4. Assembly according to any one of the preceding claims, wherein the first threshold corresponds to a variation over time of the voltage of the battery (Vbat) at least ten times, preferably at least twenty, thirty times greater than the smallest variation as a function of time calculated over a given period during charging.

5. Assembly according to any one of the preceding claims, the charge management system comprising an end of charge detection device (12) of the battery (1) intended to control the stopping of charging of the battery when the measured battery voltage (Vbat) corresponds to a fourth threshold.

6. Assembly according to any one of claims 1 to 4, the charge management system comprising a device for detecting the end of balancing of the battery intended to send information to the power supply source when the voltage of the battery measured (Vbat) at the battery terminals reaches a fourth threshold and intended to stop charging either when the charging current flowing through a battery module reaches a value less than or equal to a predefined threshold preferably between C/50 and C/100 included for a storage cell module, or when the duration of the battery charge after sending the information to the power supply source reaches a predetermined duration.

7. Assembly (1) according to one of claims 1 to 6, wherein the storage cells have a charge profile in which during a period of the charge between a state of charge of 30% and 80%, the variation as a function of time of the voltage is on average at least 10 times slower, preferably 20 times slower than the time-dependent variation of the voltage during a period of the charge between a state of charge of 95% and 100%.

8. Assembly (1) according to one of claims 1 to 7, wherein the active material is LiFePO₄.

9. Assembly according to claim 6 or according to any one of claims 7 to 8 when they depend from claim 6, wherein the electric power source (9) is intended to change the charging mode by supplying a constant voltage upon receipt of the information from the end-of-balancing-detection device.

10. Method for managing the charge of a rechargeable battery (1) comprising at least two storage cell modules (3) connected in series and a bypass device and a bypass circuit per storage cell module, the storage cells being of Li-ion type and comprising a positive electrode containing an active material of formula LiₓM_{y}P_{z}O₄₋ₜ in which M is chosen from the group comprising Fe, Co, Ni, Mn, and a mixture thereof, x ranging from 0.9 to 1.1; y ranging from 0.9 to 1.1; z ranging from 0.9 to 1.1 and t ranging from 0 to 0.4, the method comprising the following steps:
a) charge the battery by supplying a constant current,
b) measure the voltage (Vbat) of the battery,
c) calculate the variation as a function of time of the measured battery voltage (Vbat),
d) compare the variation as a function of time of the voltage (Vbat) calculated with a first threshold,
e) bypass part of the charging current from one or more modules by closing the bypass circuit at the terminals of the module(s) by the respective bypass device; when a voltage of the module (s) reaches a predetermined bypass threshold,
f) interrupt the charge if the variation in voltage (Vbat) as a function of the calculated time is greater than the first threshold,
g) discharge the module(s) through respective branch circuits when the first threshold is reached,
h) resume charging if the voltage (Vbat) of the battery (1) falls below a second threshold or if the variation as a function of time in absolute value of the voltage (Vbat) of the battery becomes below a third threshold.

11. Charging management method according to claim 10, comprising a step g') between steps g) and h) consisting in interrupting the discharge of the module or modules when the voltage of the module or modules reaches a stop threshold.

12. Charging management method according to claim 10 or 11, in which the voltage (Vbat) of the measured battery is stored and in which the second threshold is equal to the last voltage (Vbat) of the stored battery minus a predetermined voltage.

13. The charging management method according to any one of claims 10 to 12, wherein the third threshold is predetermined.

14. Charging management method according to any one of claims 10 to 13, wherein the first threshold corresponds to a variation as a function of time of the voltage of the battery (Vbat) at least ten times, preferably at least twenty, thirty times greater than the smallest variation over time calculated over a given period during charging.

15. Charging management method according to any one of claims 10 to 14, further consisting in comparing the voltage of the battery (Vbat) measured with a fourth threshold and comprising a step i) consisting in stopping the charge if this voltage (Vbat) of the measured battery is greater than said fourth threshold.

16. Charging management method according to any one of claims 10 to 14, further consisting in comparing the voltage of the battery (Vbat) measured with a fourth threshold and comprising a step i) consisting in modifying the charge of the battery. by supplying a constant voltage to the battery if this measured battery voltage (Vbat) is greater than said fourth threshold.
